# FASCICULE DE BREVET EUROPEEN

(11) **EP 3 322 134 B1**
(45) Date de publication et mention de la délivrance du brevet: **30.12.2020**
(21) Numéro de dépôt: 17201333.6
(22) Date de dépôt: 13.11.2017
(51) Int. Cl.: H04L 12/413, H04B 3/54

(54) **PROCÉDÉ D'ACCÈS À UN MÉDIA DE COMMUNICATION PARTAGÉ**
ZUGANGSVERFAHREN ZU EINEM GEMEINSAM GENUTZTEN ÜBERTRAGUNGSMEDIUM
METHOD FOR ACCESSING A SHARED COMMUNICATION MEDIUM

(30) Priorité: 15.11.2016 FR 1661054
(43) Date de publication de la demande: 16.05.2018
(73) Titulaire: Sagemcom Energy & Telecom SAS, 92500 Rueil-Malmaison (FR)
(72) Inventeur: SERGI, Jérémie, 92500 RUEIL MALMAISON (FR)
(74) Mandataire: Cabinet Le Guen Maillet

(56) Documents cités:
- US-A1- 2009 122 807
- US-A1- 2011 182 178
- US-A1- 2015 180 680

## Description

La présente invention concerne le domaine des télécommunications sur un média de transmission partagé. L'invention concerne plus particulièrement un procédé d'accès au média de transmission partagé mis en œuvre par un dispositif électronique partageant le média de transmission pour émettre des messages.

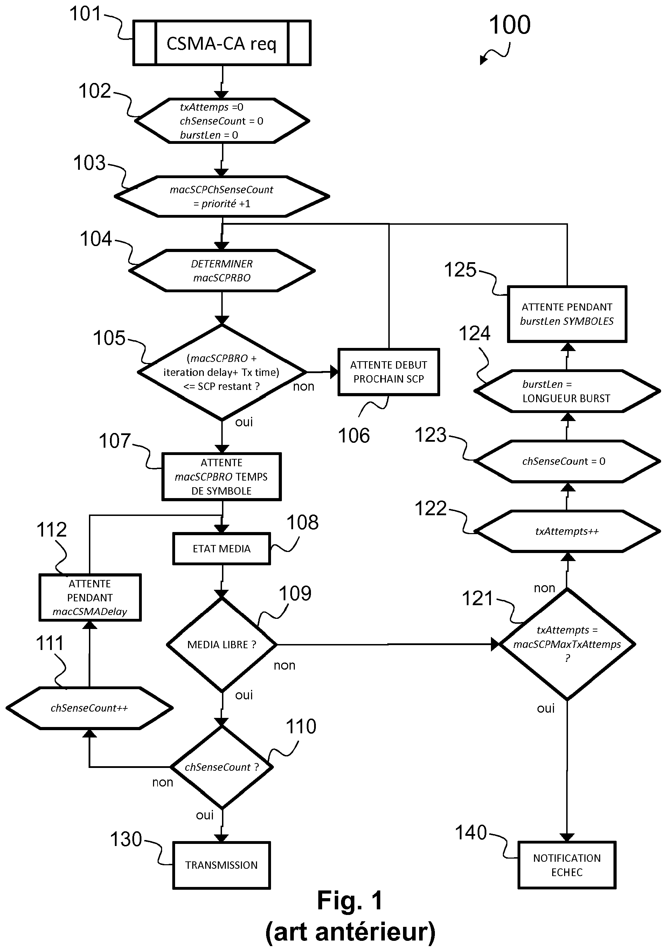

Lorsque plusieurs dispositifs électroniques doivent partager un même média de transmission (ci-après « média »), une technique pour organiser le partage dudit média entre les différents dispositifs électroniques doit être mise en place. Historiquement, lorsque le média à partager était une bande de fréquence radio, une technique dite *« accès multiple avec écoute de la porteuse »* (« *Carrier Sense Multiple Access* » en anglais) a été développée. Le principe d'un tel procédé d'accès au média est qu'un dispositif électronique voulant émettre un message sur un média partagé va commencer par vérifier que le média est disponible avant d'émettre le message. Le procédé d'accès a été amélioré au fil des années, en particulier pour s'adapter au mieux au média utilisé. Le média utilisé peut être un réseau électrique, on parle alors de technologie dite « courant porteur en ligne » (CPL) ou « *Power-line communication* » en anglais. Ainsi, des spécifications techniques, incluant un tel procédé d'accès à un média partagé, ont été élaborées. La spécification technique « *PoweRline Intelligent Metering Evolution* » (PRIME) développée par le « *PRIME Alliance Technical Working Group* », par exemple dans sa version 1.4 publiée en octobre 2014, comprend une description du procédé d'accès à un média partagé par des dispositifs électroniques tels des compteurs d'énergie communicants. Le procédé d'accès à un média, plus particulièrement à un des canaux définis dans les spécifications techniques, est décrit au chapitre 4.3.3 « *Accès au canal »* (« *Channel access* » en anglais) des spécifications techniques. La Fig. 32 des spécifications techniques PRIME v1.4 « *organigramme pour un algorithme d'accès multiple avec écoute de la porteuse et évitement de collisions »* (« *Flow chart for CSMA-CA algorithm* » en anglais) illustre ledit procédé d'accès au média, le média étant ici un canal de transmission CPL. Ce procédé est repris dans la **FIG. 1**, et illustre un procédé 100 d'accès à un média partagé exécuté par un dispositif électronique conforme aux spécifications techniques PRIME v1.4. Une description concise du procédé est faite ci-après, les détails peuvent avantageusement être retrouvés dans les spécifications techniques PRIME v1.4 publiées en octobre 2014, particulièrement chapitre 4.3.3, pages 77 à 83.

Le procédé 100 comprend une première étape 101 de réception d'une requête d'envoi d'un message (requête dite « *CSMA-CA Req* ») sur le média partagé, ici un canal CPL. Des paramètres (« *txAttemps », « chSenseCount* » et « *burstLen* » par exemple) sont initialisés à des valeurs par défaut (par exemple, ici « zéro » pour les trois paramètres) dans une étape 102. Dans une étape 103, la valeur d'un paramètre *« macSCPChSenseCount* » est fixée à *«priorité* +1 », le paramètre *« priorité »* permettant au dispositif électronique exécutant le procédé de prioriser les messages à émettre. Dans une étape 104, le dispositif électronique exécutant le procédé 100 détermine un temps d'attente (paramètre « *macSCPRBO* », dit aussi « *backoff time »),* dit aussi temps d'attente aléatoire (« *Random Backoff Time,* RBO » en anglais), utilisé pour une tentative d'émission du message sur le média. La valeur du temps d'attente, c'est-à-dire du paramètre « *macSCPRBO* », est déterminée selon la formule suivante : $macSCPRBO = random \left(0,min\left(\left({2}^{\left(priorité+txAttemps+macCSMAR1\right)}\right)+macCSMAR2\right),\left(\frac{macSCPLength}{2}\right)\right)$

Avec « *random*(A, B) », une fonction mathématique déterminant une valeur aléatoire et comprise entre les valeurs des arguments A et B de la fonction *random*,
*« min*(*A*, B) », une fonction mathématique déterminant la valeur minimale entre les valeurs des arguments A et B de la fonction *min,*
*«priorité », « txAttemps* » les paramètres précédemment décrits,
*« macCSMAR1* » et « *macCSMAR2* » deux paramètres prédéterminés dont les valeurs sont fixées par les spécifications techniques PRIME (« *macCSMAR1 =* 3 » et *« macCSMAR2 =* 1 », cf. Table 97 en page 239 des spécifications techniques PRIME v1.4), et,
*« macSCPLength* » un paramètre représentant la durée d'une période de contention (« *Shared Contention Period* - SCP » en anglais) utilisée par le procédé d'émission d'un message selon les spécifications techniques PRIME.

Ainsi, le temps d'attente « *macSCPRBO* » est déterminé aléatoirement et compris entre un temps d'attente minimal et un temps d'attente maximal. Suivant la formule décrite précédemment, le temps d'attente minimale est de « zéro ». De même, le temps d'attente maximal, dit « Tmax », est égal à : $Tmax = min \left(\left({2}^{\left(priorité+txAttemps+macCSMAR1\right)}\right)+macCSMAR2\right) , \left(\frac{macSCPLength}{2}\right)$

Dans une étape suivante 105, et avant de débuter un temps d'attente (« *backoff time* »), le dispositif électronique exécutant le procédé doit s'assurer que le temps restant pour la période de contention considérée est suffisant pour accommoder le temps d'attente, le nombre d'itérations de phase de détection du canal (« *channel sensing* » en anglais), et le temps pour l'éventuelle transmission du message (« *Tx time* » en anglais). Si le temps restant pour la période de contention est insuffisant, le temps d'attente doit être annulé et recommencer lors d'une prochaine période de contention. Ainsi, dans l'étape 105, le dispositif électronique s'assure que *(macSCPRBO* + « délai d'itération » *+ Tx time)* est inférieur ou égal au temps de période de contention (SCP) restant.

Si ce n'est pas le cas, dans une étape 106, le dispositif électronique attend la période de contention suivante pour recommencer le procédé à l'étape 104, une nouvelle valeur de temps d'attente « *macSCPRBO* » étant alors générée.

Si c'est le cas, c'est-à-dire qu'il reste un temps suffisant dans la période de contention pour accommoder le temps d'attente, les itérations de phase de détection de canal et le temps de transmission d'un message (« *Tx time* »), dans une étape 107, alors le dispositif électronique attend pendant le temps d'attente (« *macSCPRBO* » ou *« backoff time* ») déterminé lors de l'étape 104. Ce temps d'attente est exprimé en nombre de temps de symbole (« *duration symbol* ») utilisé sur le canal de transmission, un temps de symbole étant typiquement égal à « 2.24 ms ».

Une fois le temps d'attente écoulé, le dispositif électronique, dans une étape 108, réalise une phase de détection du canal (« *channel sensing* » en anglais) afin de déterminer si le canal de transmission est disponible (« *idle* » en anglais) ou bien occupé (« busy »). Le média est typiquement occupé car un autre message est en cours d'émission par un autre dispositif électronique partageant le média.

Dit autrement, le dispositif électronique attend durant un temps d'attente *« macSCPRBO* », pendant une étape 107, avant de vérifier, dans une étape 108, si le média est disponible pour émettre le message.

Dans une étape 109, suivant l'état du média déterminé lors de l'étape 108, le dispositif électronique passe à une étape 110 si le média est disponible ou bien à une étape 121 si le média est occupé.

Dans le cas où le canal est disponible, le dispositif électronique, dans l'étape 110, vérifie la valeur du paramètre « *chSenseCount* ». Si ce paramètre est égal à la valeur d'un paramètre « *macSCPChSenseCount* » prédéterminé, alors le dispositif électronique, dans une étape 130, émet le message sur le média de transmission. Possiblement, la valeur de « *macSCPChSenseCount* » est définie comme étant égale à *« priorité* +1 ».

Dans le cas où « *chSenseCount* » est inférieur à « *macSCPChSenseCount* », alors le dispositif électronique, dans une étape 111, incrémente la valeur du paramètre *« chSenseCount* ». La valeur est typiquement incrémentée de « 1 ». Suite à cette incrémentation, dans une étape 112, le dispositif électronique attend pendant une durée *« macCSMADelay* », durée typiquement égale à « 3 ms ». Le dispositif électronique exécute alors de nouveau l'étape 108 afin de déterminer l'état du canal, et recommence possiblement le cycle des étapes 108 à 112 tant que le média est disponible, pour *in fine* aboutir à l'émission du message lors de l'étape 130.

Si, lors d'une étape 109, le dispositif électronique constate que l'état du média déterminé lors de l'étape 108 est « occupé », alors le dispositif électronique passe à une étape 121. Dans l'étape 121, le dispositif électronique compare la valeur du paramètre *« txAttemps* » à la valeur d'un paramètre « *macSCPMaxTxAttemps* ». Dans le cas où la valeur de « *txAttemps* » est égale à la valeur de « *macSCPMaxTxAttemps* », alors, dans une étape 140, le dispositif électronique déclare l'échec de l'envoi du message. Possiblement, un message d'erreur est envoyé à un autre dispositif électronique ou une entrée est mise à jour dans un fichier journal. Dans le cas où la valeur de « *txAttemps »* est inférieure à la valeur de « *macSCPMaxTxAttemps* », alors le dispositif électronique, dans une étape 122, incrémente la valeur de « *txAttemps* ». L'incrémentation est typiquement de « 1 ». Ensuite, le dispositif électronique remet à « zéro » la valeur du paramètre « *chSenseCount* ». Puis le dispositif électronique, dans une étape 124, détermine la valeur de « *burstLen »* en la fixant égale à la longueur d'un message *(« Burst Length »* en anglais) en cours émis sur le média et détecté lors de l'étape 108. Cette information est fournie par une couche physique du dispositif électronique. Dans une étape 125, le dispositif électronique attend ensuite pendant la durée « *burstLen »* précédemment définie, c'est-à-dire jusqu'à la fin de l'émission du message en cours. Le dispositif électronique reprend ensuite le procédé 100 à l'étape 104, déterminant une nouvelle valeur de temps d'attente « *macSCPRBO* » pour recommencer un cycle.

Le procédé prend fin après une étape 130 ou une étape 140, c'est-à-dire, soit après une émission du message sur le média ou un constat d'échec de l'émission. <4a>

Le document US 2011/0182178 décrit un dispositif de communication conforme au standard CSMA-CA (*Carrier Sense Multiple Access with Collision Avoidance).* Il décrit notamment une méthode de gestion des collisions qui adapte la taille de la fenêtre de contention.

Ce procédé, mis en œuvre dans les spécifications techniques PRIME v1.4, mais aussi dans d'autres spécifications techniques, permet ainsi un partage du média entre plusieurs dispositifs électroniques partageant ce média de façon équitable. Toutefois, il présente quelques inconvénients.

Tout d'abord, par nature, la transmission d'un message sur un canal type CPL est non fiable. C'est-à-dire que, pour une raison quelconque, comme des interférences sur une ligne électrique, il est fréquent qu'un message soit perdu et doive être réémis. Le temps de réémission fait qu'au final, la transmission de l'information comprise dans les messages se fait avec une certaine latence. Dans un réseau CPL, ce temps de latence peut être pénalisant pour certaines applications, comme par exemple la collecte de données de comptage ou la mise à l'heure d'un compteur d'énergie communicant. Il serait souhaitable de pouvoir bénéficier d'une meilleure latence dans certains cas. De même, le procédé décrit ci-avant n'est pas forcément optimal dans les cas où peu de messages sont émis sur le média. De manière plus générale, il serait souhaitable de pouvoir réduire la latence, très dépendante du temps d'attente « *macSCPRBO* » ou *« backoff time* », dans certains cas.

Il est par conséquent souhaitable de pallier ces inconvénients de l'état de la technique.

L'invention concerne un procédé d'accès à un média de communication partagé selon la revendication 1. Des modes de réalisation complémentaire sont donnés dans les revendications 2 à 5.

L'invention concerne également un dispositif électronique adapté pour mettre en œuvre un procédé d'accès à un média de communication selon la revendication 6.

L'invention concerne également un programme d'ordinateur, qui peut être stocké sur un support et/ou téléchargé d'un réseau de communication, afin d'être lu par un processeur. Ce programme d'ordinateur comprend des instructions pour implémenter tout ou partie des étapes mentionnées ci-dessous, lorsque ledit programme est exécuté par le processeur.

L'invention concerne également un medium de stockage d'informations comprenant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la **Fig. 1** illustre schématiquement un procédé d'accès à un média partagé tel que décrit dans une spécification technique PRIME v1.4 ;
- la **Fig. 2** illustre schématiquement un procédé d'accès à un média partagé selon un mode de réalisation de l'invention ;
- la **Fig. 3** illustre schématiquement un dispositif électronique adapté pour mettre en œuvre un procédé d'accès à un média de communication partagé selon un mode de réalisation de l'invention.

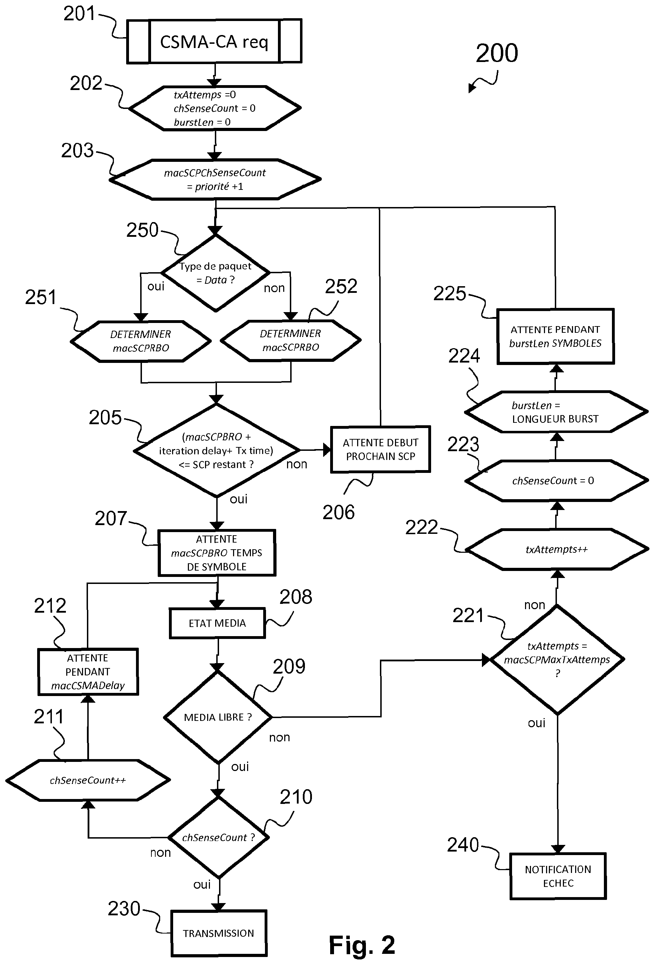

La **Fig. 2** illustre schématiquement un procédé 200 d'accès à un média partagé selon un mode de réalisation de l'invention. Le message à émettre comprend une information représentative d'un type de message. Par exemple, le type de message peut être un type « message de données » ou un type « message de « contrôle ». Le type « message de données » peut correspondre à des messages comprenant des données pour des applicatifs du dispositif électronique exécutant le procédé. Le type « message de contrôle » peut correspondre à des messages comprenant des informations liées au bon fonctionnement d'un protocole de routage ou de relais de trame, messages échangés avec d'autres dispositifs électroniques voisins ou un dispositif électronique particulier de contrôle (par exemple un « *switch node* » en anglais). Le type de message peut correspondre au champ « *PKT. C* » défini dans les spécifications techniques de PRIME v1.4 (page 104), ledit champ étant codé sur « 1 » bit. Par exemple, l'information *« PKT.C*=*0* » indique un message de type « *message de données »* (« *data packet* » en anglais) et l'information «*PKT.C*=*1* » indique un message de type «message de contrôle » (« *control packet* » en anglais).

Le procédé 200 selon un mode de réalisation de l'invention décrit dans la FIG. 2 est caractérisé en ce que le temps d'attente maximal, décrit dans la FIG. 1 lors de l'étape 104 pour le calcul du temps d'attente (« *macSCPRBO* »), dépend du type de message à émettre sur le média par le dispositif électronique.

En effet, le procédé 200 décrit dans la FIG. 2 est globalement similaire au procédé 100 décrit dans la FIG. 1 à l'exception notable de l'étape 104, qui est remplacée par les étapes 250, 251 et 252. Les étapes 201 à 203, respectivement 205 à 212, 221 à 225, 230 et 240 sont globalement similaires aux étapes 101 à 103, respectivement 105 à 112, 121 à 125, 130 et 140. Le procédé d'accès au média de communication partagé est conforme à un standard de communication de type IEEE Std 1901-2010, à l'exception de l'étape 105, la détermination d'un temps d'attente maximal « Tmax » pour émettre un message dépendant d'un type de message du message à émettre.

Durant l'étape 250, le dispositif électronique détermine le type de message à émettre. Pour cela, le dispositif électronique peut déterminer la valeur « *PKT.C* », codée sur « 1 » bit, du message à émettre. Cette information est comprise dans le message à émettre. Selon un mode de réalisation, le dispositif électronique utilise n'importe quel type d'information comprise dans le message à émettre pour en déduire un type de message. Ainsi, le type de message peut dépendre de la longueur du message à émettre ou d'une adresse destination du message. Par exemple, le dispositif électronique peut pouvoir déterminer si le type de message est « message de données » (« *data packet »* en anglais).

Suivant le type de message déterminé lors de l'étape 250, le dispositif électronique détermine la valeur d'un temps d'attente (« *macSCPRBO* ») différemment. Selon le mode de réalisation de l'invention illustré dans la FIG. 2, le dispositif électronique détermine la valeur du temps d'attente dans une étape 251 pour un message de type « message de données », ou dans une étape 252 pour un message d'un autre type.

Le dispositif électronique peut déterminer la valeur du temps d'attente en utilisant la formule précédemment décrite dans la FIG. 1, étape 104, avec :
- pour l'étape 251, « *macCSMAR1* = 1 » et « *macCSMAR2* = 0 », et,
- pour l'étape 251, « *macCSMAR1* = 3 » et « *macCSMAR2* = 1 *».*

Dit autrement, le dispositif électronique utilise, pour des messages de type « message de données », des valeurs de « *macCSMAR1* » et de « *macCSMAR2 »* inférieures aux valeurs habituellement utilisées et décrites dans les spécifications techniques. Par conséquent, le temps d'attente maximal « Tmax » pour des messages de type « message de données » est inférieur au temps d'attente maximal « Tmax » pour des messages d'un autre type. Ainsi, la latence d'accès au média est en moyenne diminuée pour des messages de type « message de données », ce qui permet de réduire la latence d'émission pour ce type de message, et augmenter le débit d'émission du dispositif électronique pour ce type de message. Il est à noter que le choix des valeurs de « *macCSMAR1* » et « *macCSMAR2* » détermine le temps d'attente maximal « Tmax » utilisé pour l'émission d'un message, et donc la valeur moyenne du temps d'attente pour le type de message concerné. Choisir un temps d'attente maximal « Tmax » réduit pour un type de message permet une réduction du temps d'attente moyen, et donc *in fine* une réduction de la latence d'émission pour ces messages.

Selon un mode de réalisation complémentaire de l'invention, la formule de calcul du temps d'attente (« macSCPRBO ») utilisée lors des étapes 251 et 252 est différente de celle utilisée lors de l'étape 104. En particulier, cette formule de calcul peut ne pas utiliser le paramètre « *priorité ».* Ainsi, la formule de calcul du temps d'attente utilisée lors des étapes 251 et 252 peut être : $macSCPRBO = random \left(0,min\left(\left({2}^{\left(txAttemps+macCSMAR1\right)}\right)+macCSMAR2\right),\left(\frac{macSCPLength}{2}\right)\right)$

Dit autrement, la formule de calcul du temps d'attente se distingue de celle utilisée lors de l'étape 104 par l'utilisation d'un temps d'attente maximal « Tmax » différent, calculé comme suit : $Tmax = min \left(\left({2}^{\left(txAttemps+macCSMAR1\right)}+CSMAR2\right), \left(\frac{macSCPLength}{2}\right)\right)$

Selon un mode de réalisation de l'invention, une autre formule de calcul du temps d'attente est utilisée.

Suite à l'étape 251 ou à l'étape 252, le dispositif électronique poursuit le procédé à l'étape 205, de façon similaire à l'étape 105.

L'étape 206 se distingue de l'étape 106 en ce que suite à l'étape 206, un nouveau temps d'attente est généré, ce temps d'attente généré étant fonction du type de message (étape 250, puis étape 251 ou 252).

Selon un mode de réalisation complémentaire de l'invention, une première liste, comprenant au moins un premier type de message, est associée à un premier temps d'attente maximal « Tmax » et au moins une deuxième liste, comprenant au moins un deuxième type de message, est associée à un deuxième temps d'attente maximal. Le temps d'attente maximal « Tmax » pour un message à émettre est choisi égal au temps d'attente maximal « Tmax » associé à la liste comprenant le type de message dudit message à émettre par le dispositif électronique. Ainsi, plusieurs types de messages peuvent partager un même temps d'attente maximal.

Selon un mode de réalisation complémentaire de l'invention, l'étape 250 comprend une étape d'estimation d'un taux d'occupation (ou de congestion) du média. Ainsi, lorsqu'il ne transmet pas, le dispositif électronique écoute le média afin de déterminer si celui-ci est occupé ou non, et peut en déduire un taux d'occupation du média.

Suivant le taux d'occupation du média, le dispositif électronique peut exécuter soit l'étape 251, soit l'étape 252. Le dispositif électronique peut tenir compte du type de message pour cela, ou bien s'affranchir du type de message lorsque le taux d'occupation est inférieur à un seuil prédéterminé.

Dit autrement, dans l'hypothèse où le temps d'attente maximal « Tmax » est réduit seulement pour les messages de type « message de données », le dispositif électronique peut décider d'utiliser ce temps d'attente maximal « Tmax » réduit pour tous les types de messages lorsque le taux d'occupation du média est inférieur à un seuil prédéterminé. Tous les messages bénéficient alors d'un temps d'attente maximal « Tmax » réduit, ce qui réduit la latence d'accès au média. Lorsque le taux d'occupation du média remonte, le dispositif électronique réserve alors un temps d'attente maximal « Tmax » réduit aux seuls paquets de type « message de données ».

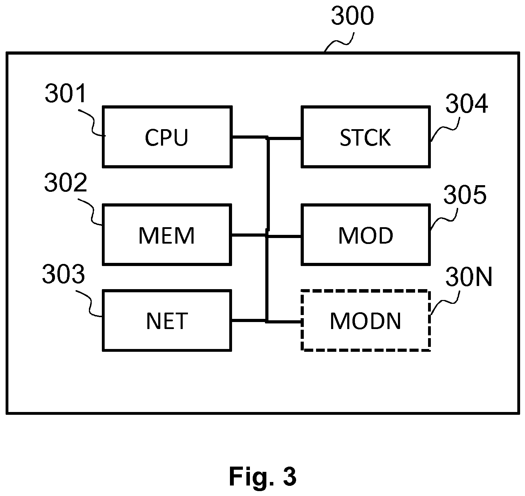

La **Fig. 3** illustre schématiquement un dispositif électronique 300 adapté pour mettre en œuvre un procédé 200 d'accès à un média de communication partagé selon un mode de réalisation de l'invention. Le dispositif électronique 300 comporte, reliés par un bus de communication : un processeur ou CPU (« *Central Processing Unit* » en anglais) 301 ; une mémoire MEM 302 de type RAM (« *Random Access Memory* » en anglais) et/ou ROM (« *Read Only Memory* » en anglais), un module réseau NET 30, un module de stockage STCK 304 de type stockage interne et possiblement des modules 305 à 30N de différentes natures. Le dispositif électronique 300 peut ainsi comprendre des modules 305 et/ou 30N suivant la nature du dispositif électronique 300. Un module 305 peut être un module de comptage électrique ou de gaz. Le module de stockage STCK 304 peut être de type disque dur HDD (« *Hard Disk Drive* » en anglais) ou SSD (« *Solid-State Drive* » en anglais), ou de type lecteur de support de stockage externe, tel un lecteur de cartes SD (« *Secure Digital* » en anglais). Le processeur CPU 301 peut enregistrer des données sur le module de stockage STCK 304 ou lire des données enregistrées sur le module de stockage STCK 304. Ces données peuvent correspondre à des paramètres de configuration du dispositif électronique 300 ou à des informations reçues par exemple dans un message reçu par le module NET 303, ou via un autre module de communication 30N. Le module NET 303 peut être conforme à une norme de type CPL, par exemple PRIME v1.4, ou plus globalement à un standard de communication de type IEEE Std 1901-2010, à l'exception toutefois de l'étape de détermination d'un temps d'attente maximal « Tmax » pour émettre un message.

Le processeur CPU 301 est capable d'exécuter des instructions chargées dans la mémoire MEM 302, par exemple à partir du module de stockage STCK 304 ou d'un réseau de communication via le module NET 303, ou d'un autre module de communication 30N par exemple. Lorsque le dispositif électronique 300 est mis sous tension, le processeur CPU 301 est capable de lire de la mémoire MEM 302 des instructions et de les exécuter. Ces instructions forment un programme d'ordinateur causant la mise en œuvre, par le processeur CPU 301, de tout ou partie des procédés et étapes décrits ci-avant. Ainsi, tout ou partie des procédés et étapes décrits ci-avant peut être implémenté sous forme logicielle par exécution d'un ensemble d'instructions par une machine programmable, telle qu'un DSP (« *Digital Signal Processor »* en anglais) ou un microcontrôleur. Tout ou partie des procédés et étapes décrits ici peut aussi être implémenté sous forme matérielle par une machine ou un composant dédié, tel qu'un FPGA (« *Field-Programmable Gate Array »* en anglais) ou un ASIC (« *Application-Specific Integrated Circuit »* en anglais). Le dispositif électronique 300 est typiquement un compteur d'énergie communicant, par exemple un compteur disposant de technologies dites AMR (« *Automated Meter Reading* » en anglais). Le dispositif électronique 300 peut mesurer de manière détaillée et précise, et éventuellement en temps réel, une consommation d'électricité, d'eau ou de gaz. La transmission des données s'effectue alors sur un média partagé, par exemple des ondes radio ou des courants porteurs en ligne (CPL), à un gestionnaire d'un réseau de distribution chargé du comptage.

Le dispositif électronique 300 est adapté pour mettre en œuvre le procédé 200 d'accès à un média de communication partagé, dit média, l'accès au média étant de type « écoute d'un support à accès multiple ». Le dispositif électronique 300, pour pouvoir émettre un message sur le média, le message comprenant une information représentative d'un type de message, attend durant un temps d'attente avant de vérifier si le média est disponible pour émettre le message, le temps d'attente étant déterminé aléatoirement et compris entre un temps d'attente minimal et un temps d'attente maximal. Le dispositif électronique 300 est adapté pour déterminer le temps d'attente maximal « Tmax » en fonction du type de message à émettre sur le média.

## Revendications

1. Procédé (200) d'accès à un média de communication partagé, dit média, l'accès au média étant de type « *accès multiple avec écoute de la porteuse* », dans lequel, un dispositif électronique (300) pour pouvoir émettre (230) un message sur le média, le message comprenant une information représentative d'un type de message, attend (207) durant un temps d'attente avant de vérifier (208, 209) si le média est disponible pour émettre (230) le message, le temps d'attente étant (251, 252) déterminé aléatoirement et compris entre un temps d'attente minimal et un temps d'attente maximal (Tmax), le procédé comprenant, pour chaque message à émettre, une étape de :
- déterminer (250) le type du message à émettre parmi un premier type de message dit « message de données » et un second type message dit « message de contrôle » à partir de l'information représentative d'un type de message dudit message à émettre, le procédé étant **caractérisé en ce que**, une première liste, comprenant au moins le premier type de message, étant associée à un premier temps d'attente maximal et au moins une deuxième liste, comprenant au moins le deuxième type de message, étant associée à un deuxième temps d'attente maximal :
- le temps d'attente maximal Tmax est choisi égal au temps d'attente maximal associé à la liste comprenant le type du message à émettre, lequel est déterminé par la formule suivante: $Tmax = min \left(\left({2}^{\left(txAttemps+macCSMAR1\right)}+macCSMAR2\right), \left(\frac{macSCPLength}{2}\right)\right)$ avec « *txAttemps* » et « *macSCPLength* » des variables prédéfinies, le procédé étant **caractérisé en ce que** des valeurs des variables « *macCSMAR1* » et « *macCSMAR2 »* sont déterminées en fonction du type de message à émettre par le dispositif électronique.

2. Procédé selon la revendication précédente, dans lequel la valeur « macCSMAR1 », respectivement « macCSMAR2 », est choisie égale à « 1 », respectivement « 0 », pour le premier type de message dit « message de données » et valeur « macCSMAR1 », respectivement « macCSMAR2 », est choisie égale à « 3 », respectivement « 1 », pour le second type de message dit « message de contrôle ».

3. Procédé selon l'une des revendications précédentes, **caractérisé en ce que** le premier temps d'attente maximal est inférieur au deuxième temps d'attente maximal.

4. Procédé selon la revendication précédente, le procédé étant **caractérisé en ce que** le procédé comprend, pour un dispositif électronique partageant l'accès au média, les étapes suivantes :
- estimer (250) un taux d'occupation du média, et,
si le taux d'occupation du média est inférieur à une valeur prédéterminée, alors :
- le temps d'attente maximal est choisi égal au premier temps d'attente maximal indépendamment du type de paquet à émettre.

5. Procédé selon l'une des revendications précédentes, le procédé d'accès au média de communication partagé étant conforme à un standard de communication de type IEEE Std 1901-2010, à l'exception de l'étape de détermination d'un temps d'attente maximal pour émettre un message.

6. Dispositif électronique (300) adapté pour mettre en œuvre un procédé (200) d'accès à un média de communication partagé, dit média, l'accès au média étant de type « *accès multiple avec écoute de la porteuse* », le dispositif électronique, pour pouvoir émettre un message sur le média, le message comprenant une information représentative d'un type de message, attendant durant un temps d'attente avant de vérifier si le média est disponible pour émettre le message, le temps d'attente étant déterminé aléatoirement et compris entre un temps d'attente minimal et un temps d'attente maximal, une première liste, comprenant au moins un premier type de message dit « message de données », étant associée à un premier temps d'attente maximal et au moins une deuxième liste, comprenant au moins un deuxième type de message dit « message de contrôle », étant associée à un deuxième temps d'attente maximal, le dispositif électronique étant **caractérisé en ce qu'**il est adapté pour :
- déterminer le type du message à émettre, parmi le premier type de message et le second type de message, à partir de l'information représentative d'un type de message dudit message à émettre,
- déterminer le temps d'attente maximal Tmax comme étant égal au temps d'attente maximal associé à la liste comprenant le type du message à émettre lequel est déterminé par la formule suivante:
$Tmax = min \left(\left({2}^{\left(txAttemps+macCSMAR1\right)}+macCSMAR2\right), \left(\frac{macSCPLength}{2}\right)\right)$ avec « *txAttemps* » et « *macSCPLength* » des variables prédéfinies, le procédé étant **caractérisé en ce que** des valeurs des variables « *macCSMAR1* » et « *macCSMAR2 »* sont déterminées en fonction du type de message à émettre par le dispositif électronique.

7. Dispositif selon la revendication précédente, dans lequel la valeur « macCSMAR1 », respectivement « macCSMAR2 », est choisie égale à « 1 », respectivement « 0 », pour le premier type de message dit « message de données » et valeur « macCSMAR1 », respectivement « macCSMAR2 », est choisie égale à « 3 », respectivement « 1 », pour le second type de message dit « message de contrôle »

8. Programme d'ordinateur, **caractérisé en ce qu'**il comprend des instructions pour mettre en œuvre, par un processeur (301), le procédé (200) permettant l'accès à un média de communication partagé, selon l'une quelconque des revendications 1 à 5, lorsque ledit programme d'ordinateur est exécuté par ledit processeur.

9. Support d'enregistrement sur lequel est stocké le programme d'ordinateur selon la revendication 8.

## Patentansprüche

1. Zugriffsverfahren (200) auf ein gemeinsam genutztes Kommunikationsmedium, Medium genannt, wobei der Zugriff auf das Medium von der Art "*Mehrfachzugriff mit Trägerprüfung"* ist, bei der eine elektronische Vorrichtung (300), um eine Nachricht auf dem Medium senden zu können (230), wobei die Nachricht eine für einen Nachrichtentyp repräsentative Information enthält, während einer Wartezeit wartet (207), ehe sie überprüft (208, 209), ob das Medium zur Verfügung steht, um die Nachricht zu senden (230), wobei die Wartezeit zufällig bestimmt wird (251, 252) und zwischen einer minimalen Wartezeit und einer maximalen Wartezeit (Tmax) liegt, wobei das Verfahren für jede zu sendende Nachricht einen Schritt enthält:
- der Bestimmung (250) des Typs der zu sendenden Nachricht unter einem "Datennachricht" genannten ersten Nachrichtentyp und einem "Kontrollnachricht" genannten zweiten Nachrichtentyp ausgehend von der für einen Nachrichtentyp der zu sendenden Nachricht repräsentativen Information,
wobei das Verfahren **dadurch gekennzeichnet ist, dass**, da eine erste Liste, die mindestens den ersten Nachrichtentyp enthält, einer ersten maximalen Wartezeit zugeordnet ist, und mindestens eine zweite Liste, die mindestens den zweiten Nachrichtentyp enthält, einer zweiten maximalen Wartezeit zugeordnet ist:
- die maximale Wartezeit Tmax gleich der maximalen Wartezeit gewählt wird, die der Liste zugeordnet ist, die den Typ der zu sendenden Nachricht enthält, die durch die folgende Formel bestimmt wird: ${T}_{max} = min \left(\left({2}^{\left(txAttemps+macCSMAR1\right)}+macCSMAR2\right), \left(\frac{macSCPLength}{2}\right)\right)$ mit "*txAttemps*" und *"macSCPLength"* vordefinierten Variablen, wobei das Verfahren **dadurch gekennzeichnet ist, dass** Werte der Variablen "*macCSMAR1*" und *"macCSMAR2"* abhängig vom durch die elektronische Vorrichtung zu sendenden Nachrichtentyp bestimmt werden.

2. Verfahren nach dem vorhergehenden Anspruch, wobei der Wert "macCSMAR1" bzw. "macCSMAR2" gleich "1" bzw. "0" für den "Datennachricht" genannten ersten Nachrichtentyp und der Wert "macCSMAR1" bzw. "macCSMAR2" gleich "3" bzw. "1" für den "Kontrollnachricht" genannten Nachrichtentyp gewählt wird.

3. Verfahren nach einem der vorhergehenden Ansprüche, **dadurch gekennzeichnet, dass** die erste maximale Wartezeit geringer ist als die zweite maximale Wartezeit.

4. Verfahren nach dem vorhergehenden Anspruch, wobei das Verfahren **dadurch gekennzeichnet ist, dass** das Verfahren für eine den Zugriff zum Medium gemeinsam nutzende elektronische Vorrichtung die folgenden Schritte enthält:
- Schätzen (250) eines Belegungsgrads des Mediums, und
wenn der Belegungsgrad des Mediums unter einem vorbestimmten Wert liegt, dann:
- wird die maximale Wartezeit gleich der ersten maximalen Wartezeit gewählt, unabhängig vom zu sendenden Pakettyp.

5. Verfahren nach einem der vorhergehenden Ansprüche, wobei das Zugriffsverfahren auf das gemeinsam genutzte Kommunikationsmedium einem Kommunikationsstandard des Typs IEEE Std 1901-2010 entspricht, mit Ausnahme des Schritts der Bestimmung einer maximalen Wartezeit zum Senden einer Nachricht.

6. Elektronische Vorrichtung (300), die geeignet ist, ein Zugriffsverfahren (200) auf ein Medium genanntes gemeinsam genutztes Kommunikationsmedium durchzuführen, wobei der Zugriff auf das Medium von der Art *"Mehrfachzugriff mit Trägerprüfung"* ist, bei dem die elektronische Vorrichtung, um eine Nachricht auf dem Medium senden zu können, wobei die Nachricht eine für einen Nachrichtentyp repräsentative Information enthält, während einer Wartezeit wartet, ehe sie überprüft, ob das Medium zur Verfügung steht, um die Nachricht zu senden, wobei die Wartezeit zufällig bestimmt wird und zwischen einer minimalen Wartezeit und einer maximalen Wartezeit liegt, wobei eine erste Liste, die mindestens einen "Datennachricht" genannten ersten Nachrichtentyp enthält, einer ersten maximalen Wartezeit zugeordnet ist, und mindestens eine zweite Liste, die mindestens einen "Kontrollnachricht" genannten zweiten Nachrichtentyp enthält, einer zweiten maximalen Wartezeit zugeordnet ist, wobei die elektronische Vorrichtung **dadurch gekennzeichnet ist, dass** sie geeignet ist, um:
- den Typ der zu sendenden Nachricht unter dem ersten Nachrichtentyp und dem zweiten Nachrichtentyp ausgehend von der für einen Nachrichtentyp der zu sendenden Nachricht repräsentativen Information zu bestimmen,
- die maximale Wartezeit Tmax als gleich der maximalen Wartezeit zu bestimmen, die der Liste zugeordnet ist, die den Typ der zu sendenden Nachricht enthält, die durch die folgende Formel bestimmt wird: ${T}_{max} = min \left(\left({2}^{\left(txAttemps+macCSMAR1\right)}+macCSMAR2\right), \left(\frac{macSCPLength}{2}\right)\right)$ mit "*txAttemps*" und *"macSCPLength"* vordefinierten Variablen,
wobei das Verfahren **dadurch gekennzeichnet ist, dass** Werte der Variablen "*macCSMAR1*" und "*macCSMAR*2" abhängig vom durch die elektronische Vorrichtung zu sendenden Nachrichtentyp bestimmt werden.

7. Vorrichtung nach dem vorhergehenden Anspruch, wobei wobei der Wert "macCSMAR1" bzw. "macCSMAR2" gleich "1" bzw. "0" für den "Datennachricht" genannten ersten Nachrichtentyp und der Wert "macCSMAR1" bzw. "macCSMAR2" gleich "3" bzw. "1" für den "Kontrollnachricht" genannten Nachrichtentyp gewählt wird.

8. Computerprogramm, **dadurch gekennzeichnet, dass** es Anweisungen zur Durchführung des Verfahrens (200) nach einem der Ansprüche 1 bis 5, das den Zugriff auf ein gemeinsam genutztes Kommunikationsmedium erlaubt, durch einen Prozessor (301) enthält, wenn das Computerprogramm vom Prozessor ausgeführt wird.

9. Speicherträger, auf dem das Computerprogramm nach Anspruch 8 gespeichert ist.

## Claims

1. Method (200) for accessing a shared communication medium, known as the medium, access to the medium being of *"carrier-sense multiple access"* type, wherein, in order to be able to send (230) a message over the medium, the message comprising an item of information representative of a message type, an electronic device (300) waits (207) for a waiting time before checking (208, 209) whether the medium is available for sending (230) the message, the waiting time being determined (251, 252) randomly and being between a minimum waiting time and a maximum waiting time (Tmax), the method comprising, for each message to be sent, a step of:
- determining (250) the type of the message to be sent from among a first message type known as a "data message" and a second message type known as a "control message" on the basis of the item of information representative of a message type of said message to be sent,
the method being **characterized in that**, a first list comprising at least the first message type being associated with a first maximum waiting time, and at least one second list comprising at least the second message type being associated with a second maximum waiting time:
- the maximum waiting time Tmax is chosen so as to be equal to the maximum waiting time associated with the list comprising the type of the message to be sent, which is determined by the following formula: $Tmax = min \left(\left({2}^{\left(txAttemps+macCSMAR1\right)}+macCSMAR2\right), \left(\frac{macSCPLength}{2}\right)\right)$ with "*txAttemps*" and *"macSCPLength"* being predefined variables, the method being **characterized in that** values of the variables "*macCSMAR1*" and *"macCSMAR2"* are determined on the basis of the type of message to be sent by the electronic device.

2. Method according to the preceding claim, wherein the values "macCSMAR1" and "macCSMAR2" are chosen so as to be equal to "1" and "0", respectively, for the first message type known as a "data message", and the values "macCSMAR1" and "macCSMAR2" are chosen so as to be equal to "3" and "1", respectively, for the second message type known as a "control message".

3. Method according to either one of the preceding claims, **characterized in that** the first maximum waiting time is shorter than the second maximum waiting time.

4. Method according to the preceding claim, the method being **characterized in that** the method comprises, for an electronic device sharing access to the medium, the following steps:
- estimating (250) an occupancy rate of the medium, and,
if the occupancy rate of the medium is lower than a predetermined value, then:
- the maximum waiting time is chosen so as to be equal to the first maximum waiting time independently of the type of packet to be sent.

5. Method according to one of the preceding claims, the method for accessing the shared communication medium being in accordance with a communication standard such as the IEEE Std 1901-2010, with the exception of the step for determining a maximum waiting time for sending a message.

6. Electronic device (300) suitable for implementing a method (200) for accessing a shared communication medium, known as the medium, access to the medium being of *"carrier-sense multiple access"* type, wherein, in order to be able to send a message over the medium, the message comprising an item of information representative of a message type, the electronic device waits for a waiting time before checking whether the medium is available for sending the message, the waiting time being determined randomly and being between a minimum waiting time and a maximum waiting time, a first list comprising at least a first message type known as a "data message" being associated with a first maximum waiting time, and at least one second list comprising at least a second message type known as a "control message" being associated with a second maximum waiting time, the electronic device being **characterized in that** it is suitable for:
- determining the type of the message to be sent from among the first message type and the second message type on the basis of the item of information representative of a message type of said message to be sent,
- determining the maximum waiting time Tmax such that it is equal to the maximum waiting time associated with the list comprising the type of the message to be sent, which is determined by the following formula: $Tmax = min \left(\left({2}^{\left(txAttemps+macCSMAR1\right)}+macCSMAR2\right), \left(\frac{macSCPLength}{2}\right)\right)$ with "*txAttemps*" and *"macSCPLength"* being predefined variables, the method being **characterized in that** values of the variables "*macCSMAR1*" and *"macCSMAR2"* are determined on the basis of the type of message to be sent by the electronic device.

7. Device according to the preceding claim, wherein the values "macCSMAR1" and "macCSMAR2" are chosen so as to be equal to "1" and "0", respectively, for the first message type known as a "data message", and the values "macCSMAR1" and "macCSMAR2" are chosen so as to be equal to "3" and "1", respectively, for the second message type known as a "control message".

8. Computer program, **characterized in that** it comprises instructions for implementing, by means of a processor (301), the method (200) allowing access to a shared communication medium according to any one of Claims 1 to 5 when said computer program is executed by said processor.

9. Recording medium on which the computer program according to Claim 8 is stored.
